# EUROPEAN PATENT APPLICATION

(11) **EP 4 046 493 A1**
(43) Date of publication of application: **24.08.2022**
(21) Application number: 22156068.3
(22) Date of filing: 10.02.2022
(51) Int. Cl.: A01N 59/00, A01N 25/16, A01N 25/34, A01P 1/00

(54) **BIOCIDAL DETERGENT**

(30) Priority: 18.02.2021 IT 202100003764
(71) Applicant: Zito, Diego, 20011 Corbetta (MI) (IT)
(72) Inventor: Zito, Diego, 20011 Corbetta (MI) (IT)
(74) Representative: Lunati & Mazzoni S.r.L.

(57) **Abstract**

A biocidal detergent (1) for human use is provided in the form of a single-dose disintregratable solid tablet (2) which comprises a biocidal oxygen-releasing active component (3) and an effervescent active component (4).

## Description

The present invention relates to a biocidal detergent for human use of the type specified in the preamble to the first claim.

Various types of biocidal detergents for human use are currently known. These products have formulations designed to ensure the elimination of viruses and bacteria from highly exposed parts of the body such as the hands. The main products on the market are in liquid form and contain a specific amount and type of denatured alcohol or synthetic chemicals for germicidal purposes.

The presence of alcohol or similar in a disinfectant product is essential as it effectively removes most pathogenic micro-organisms from the skin. Such substances can cause cell lysis of viruses, bacteria and some types of fungi or spores.

If the skin is significantly oily or dirty, these disinfectants may not be fully effective.

This type of cleaning product is generally used by hospital and healthcare staff, but the emergence of new viral or bacterial outbreaks that are easily transmitted has led to a considerable increase in demand for these products. The practice of hand sanitisation is also increasingly popular among the general population.

Furthermore, traditional liquid forms are not permitted for air transport in the cabin due to the liquid state of the products as well as the presence of alcohol.

The known technique described includes some important drawbacks.

In particular, the liquid form of traditional detergents involves the use of massive amounts of plastic packaging.

The massive production and subsequent use of plastic material has a negative impact on the environment.

The costs of transporting and storing liquid products are significant due to the volumes occupied by these products.

In addition, the increasingly frequent use of these cleaning products has led to the development of toxicological skin intolerances in many people.

In this situation, the technical task underlying the present invention is to devise a biocidal detergent capable of substantially obviating at least some of the aforementioned drawbacks.

In the context of said technical task, it is an important scope of the invention to obtain a biocidal detergent for human use which limits the amount of plastic packaging required for its transport and storage.

Another important scope of the invention is to achieve a biocidal detergent which avoids the occurrence of toxicological intolerances in the skin.

The technical task and the specified purposes are achieved by a biocidal detergent. as claimed in the annexed claim 1.

Preferred technical solutions are highlighted in the dependent claims.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the index at the end of the description, the biocidal detergent according to the invention is globally referred to as number 1.

The biocidal detergent 1 comprises a single-dose solid tablet **2.**

Said tablet 2 is preferably a rinsing formulation suitable for being manually disintegrated by a user and preferably dissolved with a little water.

Said tablet preferably contains a biocidal oxygen releasing active component 3, an effervescent active component **4** and, preferably, other auxiliary components described below.

The oxygen releaser 3 is preferably sodium percarbonate (e.g. CAS No. 15630-89-4). Such sodium salt reacts chemically with water to release oxygen.

Preferably it is in an amount by weight of between 4% and 12%.

The effervescent active component 4 is preferably sodium bicarbonate (for example CAS No. 144-55-8) which reacts with water to produce a foam.

Preferably it is in an amount by weight between 25% and 31%.

The foam produced, containing the oxygen released by the sodium percarbonate, is suitable for breaking down the microbial load present on the surface of the epidermis. Oxygen has the capacity to cause cell lysis of viruses and bacteria in a short time. This lysis process takes place effectively in a time interval preferably included in the characteristic time of hand washing, i.e. between 30" and 2'.

The auxiliary components of said tablet 2 preferably comprise a surfactant 5, they may also, or alternatively comprise a starch 6, or still other elements such as perfumes, emollient substances, humectants and even more.

The surfactant 5 provides cleansing, i.e., removes dirt present on the skin surface. It is preferably between 28% and 35% by weight. It preferably comprises sodium cocoyl isothionate (for example CAS No. 61789-32-0).

The starch 6, being substantially incompressible, or poorly compressible, gives tablet 2 an easy disintegration. It is preferably in an amount by weight of between 3% and 7%. It preferably comprises rice starch (for example CAS No. 9005-25-8100) or corn starch. Preferably, the solid tablet 2 may comprise other elements. Such elements may comprise, for example, an excipient 7 preferably comprising an amount by weight of between 10% and 18%. The excipient 7 is preferably calcium carbonate (e.g., CAS No. 471-34-1).

In addition, the tablet 2 may comprise a chelating agent 8, preferably comprised in an amount by weight between 0% and 3%. The chelating agent 8 is preferably citric acid (for example CAS No. 77-92-9).

The tablet 2 may further preferably comprise humectants **9,** preferably comprising amounts by weight between 3% and 8%. Preferably a proportion of such humectants comprises a perfume **9a.**

The disintegratability depends, on the process of making the solid tablet 2, as well as on the presence of the starch 6.

The process of making the tablet 2 involves mechanical compression of the aforementioned components, the latter being in the form of powders. The compression takes place by the application of a force preferably between 2 N and 8 N corresponding to a pressure between 2 kPa and 50 kPa.

Said compression can be applied by known mechanisms or even manually.

Since the applied force is low, the resulting single-dose tablet is easily broken up by hand.

The compression process also allows the product to be given the desired final shape. The tablet 2 preferably has a shape of a rectangular parallelepiped, more preferably with rounded corners. The dimensions of such a tablet are of the order of magnitude of a centimetre, preferably the larger side has a dimension of between 2 cm and 4 cm and the smaller side has a dimension of between 0.5 cm and 2 cm. Furthermore, the outer surface is preferably smooth.

The operation of the biocidal detergent 1 described above in structural terms is as follows.

The user takes hold of the solid tablet 2 and breaks it up by applying slight force. He then adds a little water to said crumbled compound in order to produce a foam capable of removing germs during hand rubbing.

The invention includes a new process as previously described. The components of the type previously described, in the form of powders, are compressed by applying a force of low intensity, preferably within the mentioned values. Such compression results in a single-dose solid tablet that can be manually disintegrated.

The biocidal detergent 1 according to the invention achieves important advantages.

In fact, since this detergent is in solid form, it is possible to reduce the plastic packaging necessary for its storage and transport.

Furthermore, the volume occupied by the solid tablets is significantly less than with products with the same function but in liquid form.

The impact on the environment is reduced due to a lower production of plastic material. This solid detergent has no significant toxicological impact on the skin as it contains no alcohol or similar substances.

The solid tablet has a dual function: it is both a biocide and a cleanser and therefore able to remove dirt from the skin.

Finally, the solid detergent had no restrictions during a test flight, and was carried in the cabin without any problems. The invention is susceptible to variations within the scope of the inventive concept as defined by the claims.

Within this scope all details are substitutable by equivalent elements and the materials, shapes and dimensions can be any.

Index of elements cited:
- biocidal detergent **1,**
- single dose solid tablet **2,**
- oxygen releasing biocide **3,**
- effervescent active component **4,**
- surfactant **5,**
- starch **6,**
- excipient **7,**
- chelating agent **8,**
- humectants **9,**
- perfume **9a.**

## Claims

1. Biocidal detergent (1) for human skin use comprising a single-dose solid tablet (2) comprising an effervescent active component (4),
and **characterised by**
- said solid tablet (2) is disintegratable and further comprising:
- a biocidal oxygen releasing active component (3).

2. Biocidal detergent (1) according to claim 1, wherein said biocidal active component (3) releases oxygen by reacting with water.

3. Biocidal detergent (1) according to any one of the preceding claims, wherein said biocidal active component (3) is sodium percarbonate.

4. Biocidal detergent (1) according to any one of the preceding claims, wherein said biocidal active component (3) is present in an amount by weight of between 4% and 12%.

5. Biocidal detergent (1) according to any one of the preceding claims, wherein said effervescent active component (4) is sodium bicarbonate.

6. Biocidal detergent (1) according to any one of the preceding claims, wherein said effervescent active component (4) is present in an amount by weight of between 25% and 31%.

7. Biocidal detergent (1) according to any one of the preceding claims, comprising a surfactant (5).

8. Biocidal detergent (1) according to any one of the preceding claims, comprising a starch (6).

9. Method of making a biocidal detergent (1) according to any one of the preceding claims, wherein said components in the form of powders undergo mechanical compression to give a final single-dose tablet form.

10. Method of making according to any one of the preceding claims, wherein said method of making comprises mechanical compression between 2 kPa and 50 kPa suitable to render said tablet (2) easily disintegratable manually.
